# EUROPEAN PATENT SPECIFICATION

(11) **EP 0 454 732 B1**
(45) Date of publication and mention of the grant of the patent: **20.03.1996**
(21) Application number: 90902031.5
(22) Date of filing: 12.01.1990
(51) Int. Cl.: F16D 3/79

(54) **FLEXIBLE DISC-LIKE COUPLING ELEMENT**
FLEXIBLES SCHEIBENFOERMIGES KUPPLUNGSELEMENT
ELEMENT D'ACCOUPLEMENT FLEXIBLE EN FORME DE DISQUE

(30) Priority: 12.01.1989 US 296577
(43) Date of publication of application: 06.11.1991
(73) Proprietor: ZERO-MAX, INC., Minneapolis, MN 55441 (US)
(72) Inventor: NAMENY, Frank, J., Rogers, MN 55374 (US)
(74) Representative: Ström, Tore
(86) International application number: US9000265
(87) International publication number: WO9008268

(56) References cited:
- GB-A- 1 500 623
- US-A- 2 046 208
- US-A- 2 386 017
- US-A- 2 855 767
- US-A- 3 635 050
- US-A- 3 987 645
- US-A- 4 321 805
- US-A- 4 776 824
- US-A- 4 802 881

## Description

### FIELD OF THE INVENTION

This invention relates in general to flexible couplings for joining a driving shaft to a driven shaft, which may be misaligned relative to each other, and more particularly to a flexible disc-like coupling element of the type having a hub portion and connector portion means for connecting the hub portion to other parts of the flexible disc-like coupling element, the hub portion at least partially defining and at least partially surrounding a central aperture. A coupling element of this kind is disclosed in United States Patent No. 4,331,004 to Schmidt.

The invention also relates to a coupling of the type employing one or more flexible disc elements of the kind referred to above which allow high axial and/or angular displacement between the shafts with increased torque transfer capability.

### BACKGROUND OF THE INVENTION

When the axes of rotation of a driving and a driven shaft are not in alignment, there are a number of possible categories of such misalignment. One may be considered parallel offset, that is, where the axes are parallel to each other but spaced from one another in a transaxial direction. Another may be considered angular offset, which is where the axes are not parallel but intersect at an angle, although the axes may lie in parallel planes. The third is misalignment in the axial direction.

Numerous coupling devices have been developed to transmit power from or between two such shafts. United States Patent No. 3,625,024 to Kikuchi, which issued December 7, 1971, and United States Patent No. 4,321,805, which issued to Bossler, Jr. on March 30, 1982, disclose such coupling devices, but they are limited in their torque carrying capabilities because the arms used to transmit torque are long and are subject to column buckling. Each of the couplings includes an element having a single beam or column with V-shaped elements at each of their ends for connection to driving and driven elements, such as rotatable shafts or hubs on such shafts. In each of these coupling elements, a beam or column which connects the "V", is susceptible to buckling under high torque loadings. This limits torque carrying capability.

Another type of coupling provided to transfer loads to accommodate axial misalignment or displacement between a driving and a driven shaft or displacement between a driving and a driven shaft is found in a series of patents currently assigned to the Assignee of the present invention. These are: United States Patents Nos. 4,282,723; 4,317,339 and 4,331,004, which issued on August 11, 1981, March 2, 1982 and May 25, 1982, respectively, to Richard Schmidt.

In the Schmidt devices the actual coupling element, which is attached to hubs on each of a driving and a driven shaft, includes an annular portion and two pairs of parallel arms. Whereas the arms themselves are parallel, the pairs are not symmetrical. The arms are sufficiently flexible to provide good axial and/or angular displacement to compensate for the misalignment. However, there are inherent limitations in the design resulting in a limited ability to transfer high torque loads. This results from the fact that regardless of the direction of rotation, at least one pair of arms at all times is in compression without any compensating tensile component. The result is that under high torque conditions, the arm under compression is susceptible to buckling which, therefore, limits the load carrying capacity of the entire coupling element. The Schmidt type of device is also known as an open-end arm or open-link type of coupling.

Diaphragm-type couplings are known which permit large torque transmission, but are able only to handle slight angular misalignment on the order of 1/4 degrees to 1/3 degrees.

Flat metal discs, such as the Formsprag® type (Formsprag® is a registered trade mark of Dana Corporation), are also well known, which offer high torque transmission, but are not capable of handling severe misalignments of driving and driven shafts. Also, in flat disc couplings, the phenomenon of "fretting" occurs. There are two types of "fretting", i.e. (a) nutating around the bolt bearing washer, and (b) linear fretting, which occurs by the rubbing together of one disc on another (generating a shearing action) away from the connection area of the disc. As the disc material rubs, it oxidizes and disturbs the substrate, eventually propagating a fatigue crack. This is especially prevalent in discs having a thickness on the order of 0.0381 cm to 0.2286 cm. Coating on such discs may extend their life, but they also deteriorate under the rubbing action.

It is an object of the present invention to provide a coupling mechanism capable of transmitting high torque loads while compensating for axial and/or angular misalignment.

It is another object of the present invention to provide a coupling mechanism which is capable of transferring torque loads in shear rather than either tension or compression alone, to approximate a diaphragm-type performance, while permitting higher angular misalignment, and axial displacement, both continuous and intermittent.

Still another object of the present invention is to provide a coupling mechanism which is capable of offsetting compression loads in each torque transmitting member by a tension load.

A still further object is to provide a coupling which eliminates fretting effects and bending fatigue adjacent to the means of attachment.

An added object is to provide a coupling which can, in unidirectional applications, be assembled to minimize fretting by placing all attachment elements such as lobes in compression; or alternatively to maximize torque carrying capacity by placing all lobes in tension.

### SUMMARY OF THE INVENTION

In order to achieve said objects the flexible disc-like coupling element has obtained according to the invention the characterizing features of claim 1.

The flexible coupling of the invention, including one or more elements of claim 1 has the features of claim 11 or claim 12.

The above and other features of the invention including various and novel details of construction and combinations of parts, will now be more particularly described with reference to the accompanying drawings and pointed out in the claims. It will be understood that the particular misalignment compensating and high torque transmission coupling device embodying the invention is shown by way of illustration only and not as a limitation of the invention. The principles and features of this invention may be employed in varied and numerous embodiments without departing from the spirit and scope of the invention.

### BRIEF DESCRIPTION OF THE DRAWINGS

Figure 1 is a coupling mechanism representing the prior art as taught in U.S. Patent 4,331,004 to Schmidt.

Figure 2 is an end view thereof as viewed from the left side of Figure 1.

Figure 3 is a flexible coupling member employed in the prior art Schmidt device.

Figure 3A is a view of a typical Formsprag® type of flexible coupling member employed in the prior art.

Figure 4 is a flexible coupling member employed in the coupling mechanism of the invention.

Figure 5 is the same form of flexible coupling member as shown in Fig. 4 which can be employed in an alternative attachment arrangement of the coupling mechanism of the invention.

Figure 6 is another form of flexible coupling member which can be employed in the coupling mechanism of the invention.

Figure 7 is a preferred form of flexible coupling member which can be employed in the coupling mechanism of the invention.

Figure 8 is an end view of a preferred form of the coupling mechanism of the invention employing the flexible coupling member shown in Figure 7.

Figure 9 is a side view of the coupling mechanism of Figure 8.

Figure 10 is an exploded perspective view of a preferred form of the coupling mechanism of the invention employing an intermediate hub member.

Figure 11 is a view of a further form of flexible coupling member of the invention which eliminates the use of an inner ring element.

Figure 12 is a view of a still further form of flexible coupling member of the invention in which there are two pairs of lobes used, and

Figure 13 is a view of a still further form of flexible coupling member of the invention in which two connector elements are used per lobe.

### DETAILED DESCRIPTION OF THE INVENTION

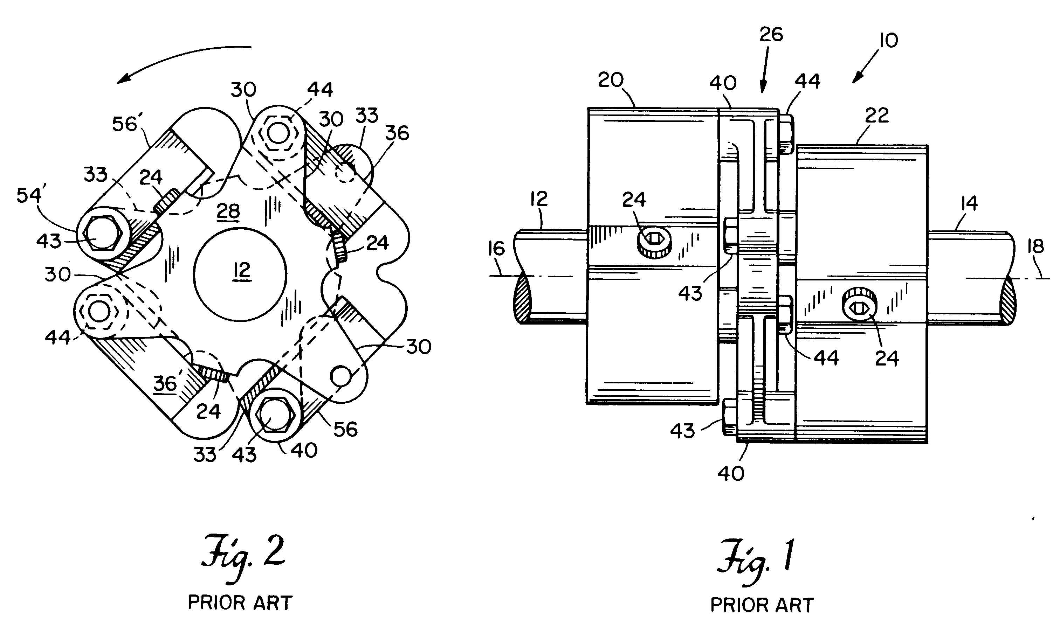

Referring to Figs. 1, 2 and 3, the prior art as represented by U.S. Patent 4,331,004 to Schmidt will now be described. The Schmidt device comprises a flexible coupling mechanism generally indicated as 10, which connects a first shaft 12, which can be a driving shaft (hereinafter sometimes referred to as Shaft A), to a second shaft 14, which can be a driven shaft (hereinafter sometimes referred to as Shaft B). Whereas the axis of rotation 16 of the shaft 12 and the axis of rotation 18 of shaft 14 appear to be aligned, they may suffer from any one or combination of the misalignments described previously.

There are three basic members comprising the coupling mechanism 10. They include a first coupling member 20 (Fig. 1) and a second coupling member 22 which are adjustably secured to shafts 12 and 14 respectively by set screws 24 or their equivalents. An intermediate flexible member, generally indicated at 26, is located between the first and second coupling members 20 and 22. The first and second coupling members 20 and 22 are substantially identical to each other, consequentially, only one will be described here. Coupling member 20 includes a ring-shaped annular portion 28 having element receiving portions in the form of spider-like arms 30 extending radially outwardly and approximately 120 degrees apart.

Whereas the first coupling member 20 has been described in general and shown in Figure 2 in solid lines, the companion coupling member 22 is shown for the most part in dotted lines.

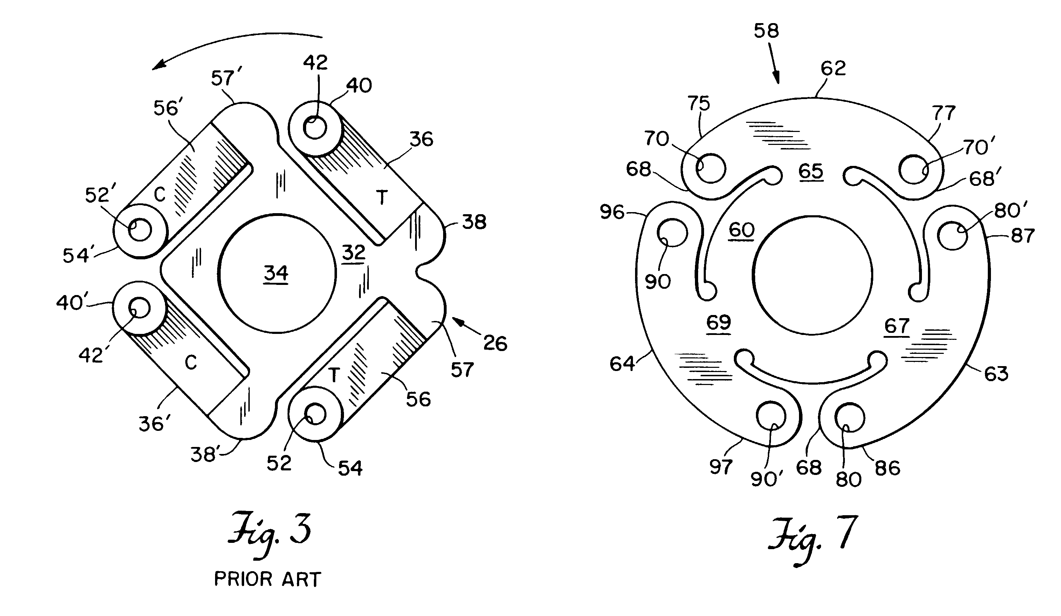

The prior art intermediate flexible coupling member 26 will best be seen in Figure 3. It includes a generally ring-shaped annular portion 32 which has a cylindrical interior opening 34.

The intermediate member 26 also includes a first pair of opposed generally parallel arm portions 36, 36' having attached ends 38, 38' respectively connected to the annular portion 32. Each arm 36, 36' also has a free end 40, 40', respectively, provided with the openings 42, 42' respectively therein to receive a bolt to attach the arms 36, 36' to two of the three projecting spider-like arms 30 of the driving coupling member 20 as shown in Figures 1 and 2. The pair of free ends 40, 40' on the arms 36, 36', respectively, are each connected to the spider arms as shown in the upper right and lower left quadrants of Figure 2, the connection being accomplished by bolts 44. The remaining arm 30 (lower right quadrant of Figure 2) remains unconnected.

The intermediate member 26 further has a second pair of opposed generally parallel arm portions 56, 56', having attached ends 57, 57' respectively connecting such arm portions to the annular portion 32. Each arm 56, 56' also has a free end 54, 54' respectively, provided with the openings 52, 52' respectively, therein to receive a bolt to attach the arms 56, 56' to two of the three projecting spider-like arms 33 of the driven coupling member 22, as shown in Figures 1 and 2. The pair of free ends 54, 54' on the arms 56, 56' respectively, are each connected to the spider arms 33 as shown in the lower right and upper left quadrants of Figure 2, the connection being accomplished by bolts 43. The remaining arm 33 (upper right quadrant of Figure 2) of the driven coupling member remains unconnected.

In operation, the driving shaft 12 transmits torque through coupling member 20, the arm 30, to arm portion 36 of the intermediate member 26 (assuming a counter-clockwise rotation as shown in figures 2 and 3) through the bolt connection. The torque is then transmitted through the bolt connection. The torque is then transmitted through the attached ends 38 and 57 to arm 56 and via arm 33 of the driven coupling member 22 to the shaft 14. At the same time, torque is also transmitted through arm 30 to arm 36 and end 38' to ring portion 32 and via end 57' to arm 56' and via another arm 33 and second coupling member 22 to shaft 14.

With the direction of rotation being counter-clockwise as viewed in Figures 2 and 3, as indicated by the arrows, the arm is in tension and the arm 36' is in compression, as indicated respectively by the letters "T" and "C" in Figure 3. Also, the arm 56 is in tension and the arm 56' is in compression as indicated by the letters T and C in Figure 3. In other words, the coupling member 20 pulls the arm 36 and pushes the arm 36' by means of the bolts which pass through the free ends 40, 40' of the arms 36, 36', respectively. This renders arm 36' susceptible to columnar buckling, and thus limits high torque transmission. Also, the arm 56 is in tension and the arm 56' being in compression is also susceptible to columnar buckling. The foregoing shortcoming of the Schmidt coupling is one of the aspects which the present invention intends to improve upon.

While only a sketchy description of the apparatus and function disclosed by Schmidt has been given reference should be had to the patent cited for a more complete description of the function as well as how it behaves in transmitting torque between misaligned shafts. It should be noted that as described above the spider arm 30 in the lower right-hand quadrant of Figure 2 is unconnected to the intermediate coupling member. The spider arm 33, which is part of the second coupling member 22 and shown in the upper right-hand quadrant of Figure 2, is also coupled.

As shown in Figure 3A, another type of prior art device is the Formsprag® type of intermediate flexible member which can be used singly or in a pack. The flexible member may be in the form of a metal flexible disc 26' having a circular opening 34' and provided with four holes 42", 42''', 52" and 52''' for receiving bolts to be mounted to a driving and driven shaft coupling element. The convention mentioned above is used, i.e. the connection to the driving shaft is shown by the letter "A" and the connection to the driven shaft is shown by the letter "B". Portions of the disc 26' are respectively placed in tension and in compression, assuming a counter-clockwise driving motion as shown by the arrow in Figure 3A. The tensile and compressive forces are indicated by the letters "T" and "C". Although in such a type of device the sides in tension restrain the sides in compression from collapsing because of the geometry to obtain good torque transmission, there is very limited ability to accept angular misalignment. This is another feature found in the prior art which the invention is intended to overcome.

In applicant's invention the use of lobes as shown in Schmidt is also found to be advantageous, but there is provided in connector element to each lobe to interconnect them which is positioned between the ends of the lobes to reduce the column length. Obviously a halfway positioning is optimum. This provides a buckling constraint. The column length is the distance between the connecting bolt or washer outer diameter, and the inner end of the connector neck, instead of the entire length of the lobe arm as shown in the Schmidt device. This effectively reduces the column length subject to buckling by 2/3rds, but reduces the effective flexing arm by only 50%. A lobe/connector arrangement is thus preferred to obtain more torque. It is thus found that the shorter the length of the column arm, the more torque can be transmitted. Another feature of the invention is the use of an annular ring element to provide load sharing by distributing the torque transmittal forces.

As shown in Figure 4 the teachings of the invention may be applied to a flexible coupling disc 126 which has two lobes 130 and 140 connected to an inner hub or force transmission ring 131 by connector portions 133 and 143, respectively. Although a ring is shown as the shape of hub 131 other shapes can be used, e.g. a diamond shape, as long as the function of force transmission between lobes is obtained. A third connector element is provided in the form of lug portions 135 and 137, also connected to the force transmission ring 131. Lobe 130 has bolt holes 136 and 138 at its ends, and lobe 140 has bolt holes 142 and 144 at its ends. Lug 135 is provided with bolt hole 134 and lug 137 is provided with bolt hole 139. The connection of the flexible coupling is shown by convention as being to driver shaft A and driven shaft B by placement of the letters "A" and "B" in the bolt holes as shown in Figure 4. With the direction of rotation of the coupling member being clockwise as indicated in Figure 4, both ends of lobe 130 are placed in compression and both ends of lobe 140 are placed in tension. The lugs 135 and 137 are placed in shear. Forces are thus balanced out to obtain higher torque transmission, i.e. the shear and tension forces in lobe 140 and lugs 135 and 137 balance out the compression forces in lobe 130 to prevent column buckling.

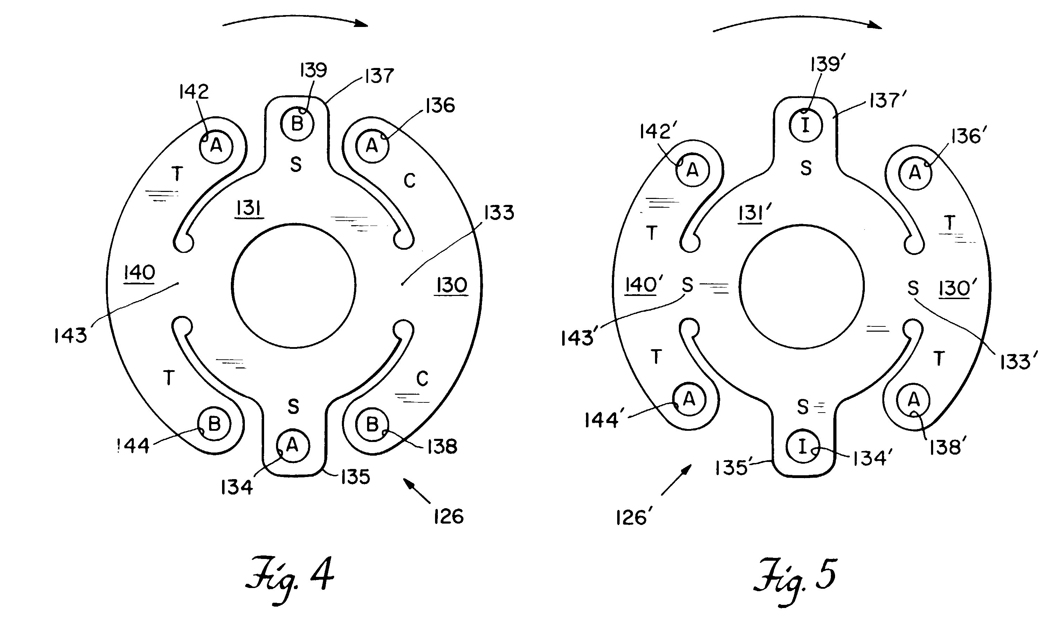

To eliminate columnar loading entirely an intermediate coupling member can be used (as described in more detail hereafter), which is illustrated in Figure 5. Flexible coupling disc 126' has two lobes 130' and 140', which are connected by connector portions 133' and 143' respectively to the inner force transmission ring 131'. Lobe 130' is provided with bolt holes 136' and 138' at its ends; and lobe 140' is provided with bolt holes 142' and 144' at its ends. Lugs 135' and 137' are provided with bolt holes 134' and 139', respectively, and are connected to an intermediate hub as shown by the convention "I" placed in these bolt holes. By using an intermediate hub member at least one flexible coupling disc must be placed on each side of such intermediate hub for connection respectively to the driving and to the driven coupling member. Figure 5 shows a disc which has both of its lobes 130' and 140' connected to the driving member A, and another identical flexible coupling disc will have both of its lobes connected to the driven member B. These will be mounted on either side of the intermediate hub member and the lugs 135' and 137' of both of such discs would be affixed to the intermediate hub. Such an arrangement increases torque transmission still further since it is accomplished all in shear similar to a diaphragm type of coupling. It is the shear forces generated at the connector portions 133' and 143' which cause force transmission and the disc lobes are not column loaded since they function essentially as "dead" elements. The use of the intermediate hub allows for more misalignment, and misalignment conditions.

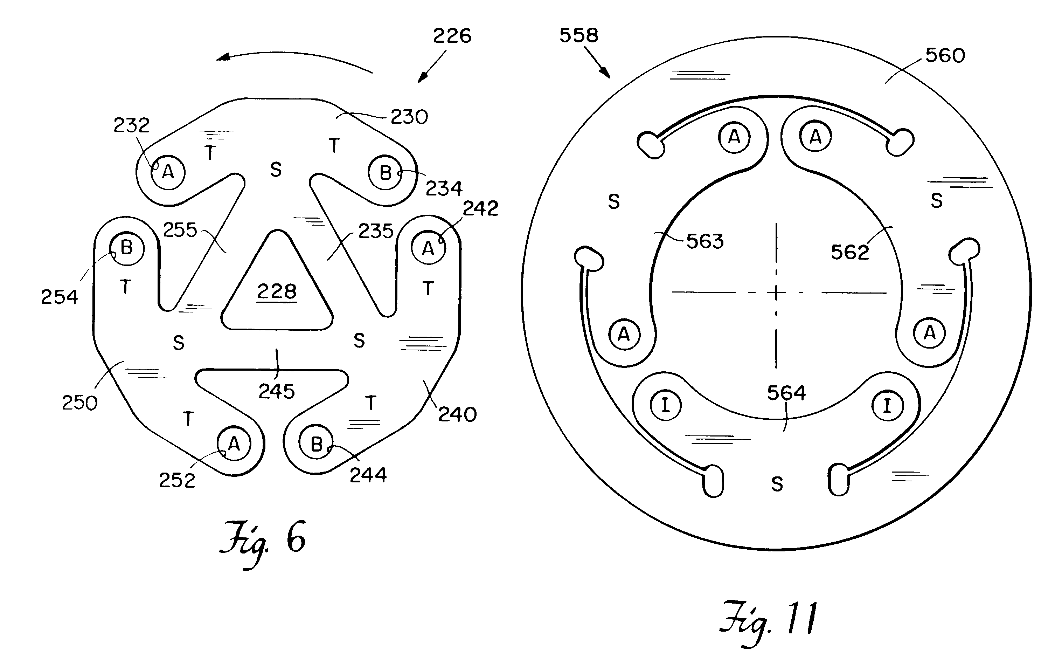

The connector portions and the central hub can be combined in mechanical function by the use of a series of connector bars as elements connecting the lobes. As shown in Figure 6 a flexible coupling disc 226 is formed with three lobes 230, 240 and 250 which are interconnected by three connector bars 235, 245 and 255, arranged in the form of a delta connection. In this arrangement radial bending due to torque transmission is eliminated. Obviously, other forms could be used, such as a Y shape, or even only two bars being joined at one lobe, or also a spoked type with bars joined at the center. The lobes are provided with bolt holes 232, 242 and 252 for connection to a driving hub, and holes 234, 244, and 254 for connection to a driven hub. With rotation in the counter-clockwise direction as shown in Figure 6 each of the lobes will be in tension and subjected to radial bending from torque. The bars function as torsion beams due to actions caused by angular and axial misalignment of the coupling hubs.

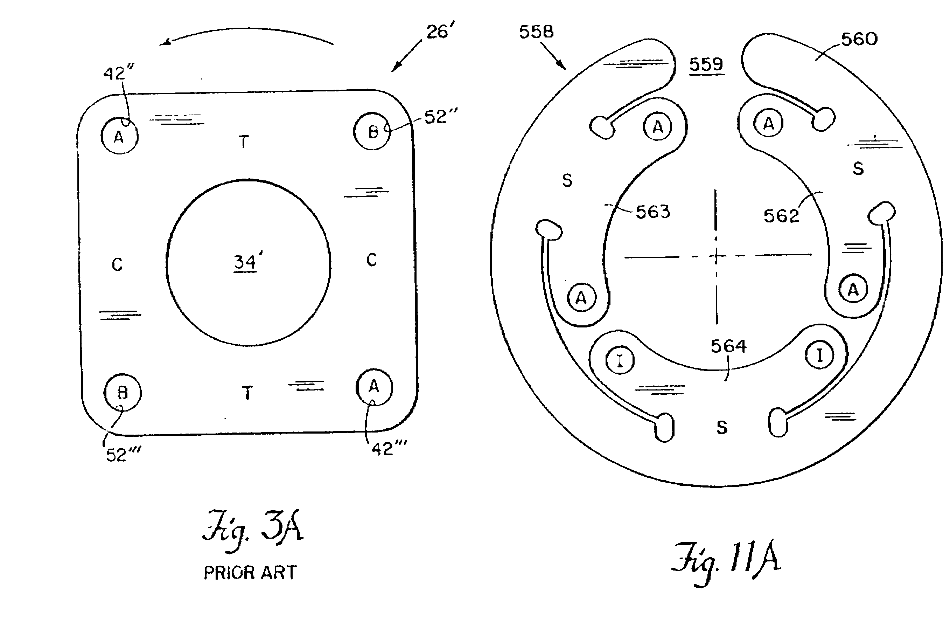

A preferred form of applicant's invention is shown in Figures 7, 8 and 9 in which a flexible coupling disc member 58 is used. As shown in Fig. 7 the disc 58 includes an inner hub portion 60, which is illustrated as being essentially circular in shape. As indicated previously the shape may be other forms such as for example, triangular, without departing from the scope of the invention. There are shown a plurality of symmetrical outer lobes 62, 63 and 64, respectively connected to the inner hub 60 via connector portions 65, 67 and 69. The lobe 62 has a pair of arms 75, 77 joined together adjacent the radial connector 65 and extending away therefrom in opposite circumferential directions. Similarly, the lobe 63 is provided with the arms 86, 87 adjacent the radial connector 67; and the lobe 64 is provided with the arms 96, 97 adjacent the radial connector 69. Each lobe terminates in symmetrically arranged arms provided with mounting holes for bolts. Thus lobe 62 has bolt holes 70, 70' in arms 75, 77 respectively; lobe 63 has bolt holes 80, 80' in arms 86, 87 respectively; and lobe 64 has bolt holes 90, 90' in arms 96, 97 respectively.

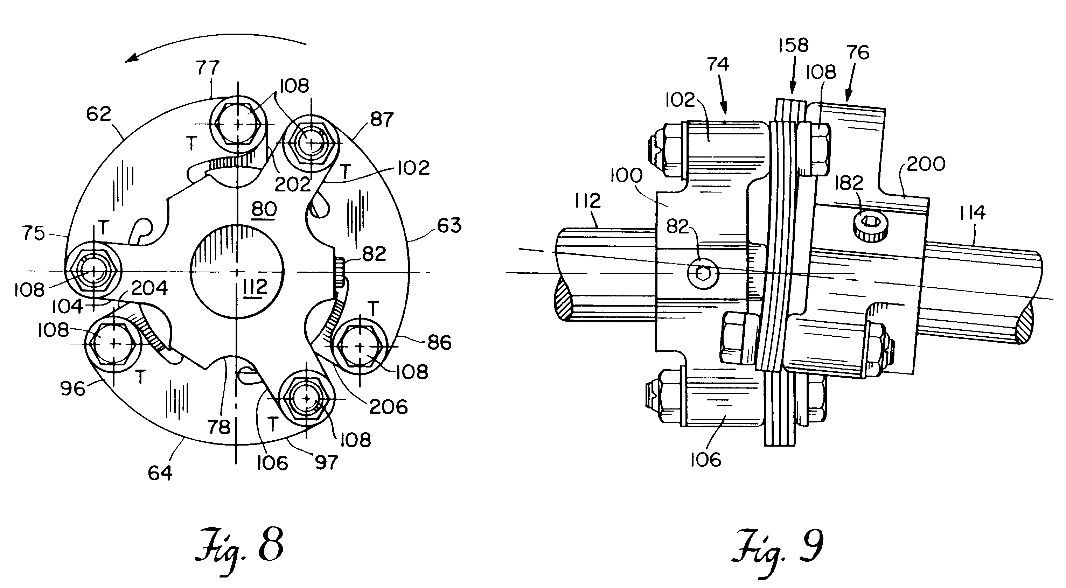

As will be seen in Figure 9 the discs 58 are used in a plurality to form a disc pack. Each of these discs may be relatively thin or thick, and are flat upon assembly. They may be made of any appropriate similar or dissimilar metallic or nonmetallic material. Also, as seen in Figure 9 the disc pack 158 serves as an intermediate coupling member (four individual flexible discs being shown, although any number can be used) which is bolted together between the first and second axially arranged coupling members 74 and 76 (shown as slightly misaligned in Figure 9).

As shown in Figure 8 the coupling member 74 is formed with three spider-like arms 102, 104 and 106 extending from a central hub 100 which contains a bore to accommodate the driver shaft 12. A set screw 82 is employed to secure the coupling member 74 to the driving shaft 112. In a similar manner, the driven coupling member 76 is formed with three spider-like arms 202, 204 and 206 extending from a central hub 200 containing a bore to accommodate the driven shaft 114. Set screw 182 is provided to secure the coupling member 76 to the driven shaft 114. Although not shown, keyways and keys may be used in a well understood manner with the set screws locking onto the keys themselves. Also, although a coupling member with "spider-like" arms is shown, other shapes, e.g. round, could be employed, while still coming within the spirit and scope of the invention.

Figures 8 and 9 show the bolting arrangement. A series of identical bolts 108 are used as described hereafter. A bolt 108 secures the arm 87 of lobe 63 to the arm 102 of the driving member 74 (as shown at the one o'clock position of Figure 8). Another bolt 108 secures the arm 75 of lobe 62 to the arm 104 of the driving member 74 (as shown at the 9 o'clock position of Figure 8). Still another bolt 108 secures the arm 97 of lobe 64 to the arm 106 of the driving member 74. Similarly, the arms 202, 204 and 206 of the driven member 76 are bolted to the arms 77, 96 and 86 of the lobes 63, 62 and 64, respectively. Thus, each lobe is attached to both the driver and the driven coupling members and is flexed in the process of being driven as shown in Figure 9.

Assuming a counter-clockwise direction of rotation as shown by the arrow in Figure 8, lobes 62, 63 and 64 are all placed in tension because their respective arms 75, 87 and 97 are being pulled by the respective spider arms 104, 102 and 106. The respective connector portions 65, 67 and 69 (see Figure 7) are placed in shear. No columnar buckling can occur in this arrangement. If a clockwise direction of rotation were chosen in Figure 8, the lobes 62, 63 and 64 would all be placed in compression because their respective arms 75, 87 and 97 are being pushed by the respective spider arms 104, 102 and 106. Fretting is inhibited due to the effect of compressive forces on the substrate of the material.

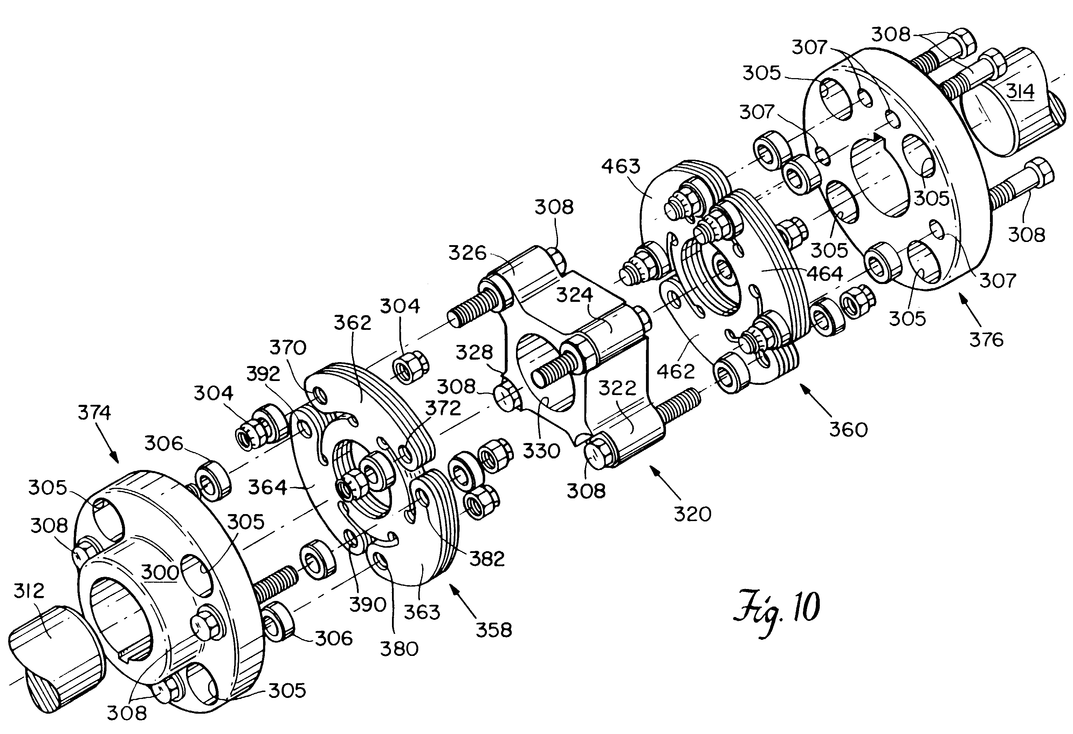

In the preferred embodiment of the invention an intermediate hub is preferably used, as suggested by the discussion attendant with the description of Figure 5. The arrangement is shown in the exploded perspective view of Figure 10. A driving shaft 312 has mounted to it the first coupling member 374, which has an outwardly extending hub 300 affixed to the shaft 312 by means of a key and set screw in a well known manner. A series of four (only three being seen in Figure 10) access holes 305 pass through the coupling member 374. Four bolts 308 are arranged to pass through the coupling member through appropriate holes for fastening to a first disc pack 358. All of the bolts are assembled by means of a spacer washer 306 and nut 304. Each individual disc is formed in the manner shown in Figure 7. Although four such discs are shown in Figure 10 for each disc pack, any number can be used. Each disc may be separated from the next one by means of a spacer (not shown). Disc pack 360 is constructed similar to disc pack 358. Three lobes 362, 363 and 364 are formed by the disc pack 358. Lobe 362 is formed with through holes 370 and 372 at the ends of its arms; lobe 363 is formed with through holes 380 and 382 at the ends of its arms; and lobe 364 is formed with through holes 390 and 392 at the ends of its arms. Bolts 308 pass through the holes 392, 390, 380 and 382 to fasten the lobes 363 and 364 to the driving coupling member 374. The lobe 362 is fastened to an intermediate hub 320. The hub 320 is generally square shaped and has a central opening 330. Formed on the outer surface of the hub 320 are four bosses 322, 324, 326 and 328, each of which has a through hole to receive a bolt 308. The lobe 362 is fastened to the intermediate hub 320 by bolts passing through bosses 324 and 326 and through the holes 372 and 370, respectively. In a similar manner the lobe 462 of disc pack 360 is fastened to the intermediate hub 320 by bolts 308 passing through the bosses 322 and 328 and through the holes in the ends of the arms of lobe 462. The lobes 463 and 464 of the disc pack 360 are fastened to the second coupling member 376 by means of bolts 308 passing through holes 307 in member 376 and through the appropriate holes in the lobes. The coupling member is in turn fastened to a driven shaft 314.

Although only one intermediate hub is shown in this preferred embodiment, a series of intermediate hubs (associated with a series of flexible disc packs) may be employed to accommodate greater misalignments.

With the coupling device of the invention as shown in Figure 10 employing an intermediate hub, the disc packs function in the manner of a "wish-bone", i.e. flexing occurs in the active inner ring portions adjacent the lobes which are fastened to the intermediate hub. Flexing in this manner greatly increases the flexing length, resulting in lower side forces, greater angular misalignment capability and predominately high axial displacements. These are permitted without compromising the torque transmitting ability of the device when compared to convoluted diaphragm and disc coupling. In Figures 5 and 12 the disc packs function in a manner of a "double wish-bone flex". The lobes which are fastened to the intermediate hub are therefore either pulled or pushed when the coupling device is in operation, and their connector portions to the inner ring are subjected to shear forces. The lobes which are fastened to the driving or driven coupling member essentially are "dead" elements in the flex mode, but are a part of the torque transmission system since both ends of each lobe are fastened to the same member. There is essentially no flexure in these lobes and they do not bend. There is by this arrangement a greater ability to handle misalignment and greater ability to transfer torque, because it is handled in shear. Fretting action is eliminated as well as fatigue problems at the bolts because there is no bending of the arms of the lobes at the lobe end attachment points. None of the lobes are subject to column buckling.

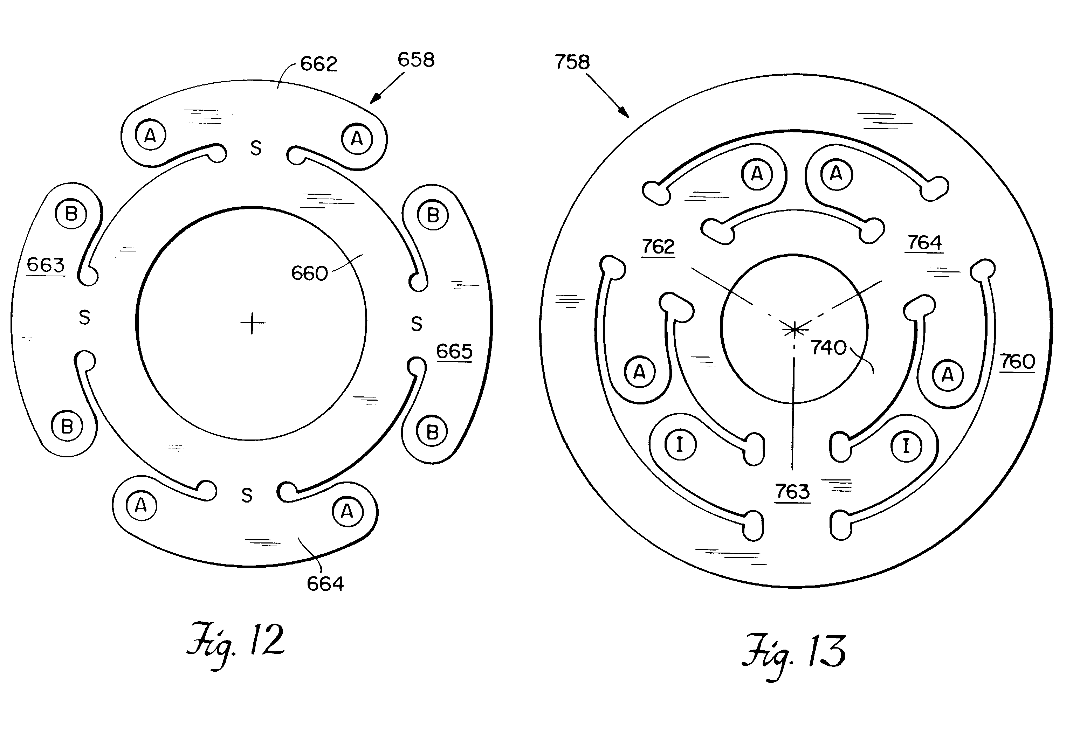

Still other forms of discs may be used where an intermediate hub is employed. For example, in Figure 11, instead of an inner ring, the disc 558 is provided with an outer ring 560 having inwardly arranged lobes 562, 563 and 564. Lobes 562 and 563 are shown as being connected to the driving coupling member while the lobe 564 is connected to the intermediate hub. Companion discs or disc packs on the other side of the intermediate hub would have their lobes 562 and 563 connected to the driven coupling member. In such a coupling device there is no column buckling in the arms of the lobes, the majority of the torque load is carried in shear at the connecting portions of the lobes to the outer ring. In Figure 12 there are four lobes 662, 663, 664 and 665 shown as being connected to an inner torque reaction ring 660 in the disc 658. With lobes connected as shown to the driving and the driven coupling members, the disc functions as a solid hinged gimbal and large angular misalignment is allowed. Where an intermediate hub is employed two of the lobes (e.g. the lobes indicated as being connected to "B") would be connected to the intermediate hub, and another disc or disc pack would be employed on the other side of the intermediate hub which would have two opposed lobes connected to the driving coupling member. This arrangement would allow for parallel misalignment as well as angular misalignment. For maximum torque transmission, the inner hub opening can be reduced to a small bore, to allow the solid clamping (as by means of a bolt) of the flexible disc (or disc pack) to the intermediate member. The attachment of the flexible disc in this manner acts as a constraint on plate buckling, which permits very high torque transmission at very high transient and continuous forms of misalignment. In still another arrangement a disc 758 could be employed as shown in Figure 13. The disc 758 is formed with an outer torque reaction ring 760 and an inner torque reaction ring 740. Three lobes 762, 763 and 764 are connected between the inner and outer rings. When used with an intermediate hub the bolt connection is as shown in Figure 13, it being understood that a similar disc or disc pack would be located on the other side of the intermediate hub and be connected to the B or driven coupling member instead of the driving coupling member A. Very high angular misalignment may be accommodated as well as at very high torques. The connector portions of the lobes are subjected to double shear because of the use of inner and outer torsion rings. The "wish-bone" flexing as above described occurs at both the inner and outer ring connections to the lobes.

It is clear that other arrangements of discs, and different combinations employing intermediate hubs may be employed, all within the spirit and scope of the present invention. For example, in those configurations which position the discs at the outside ends of the coupling (i.e. with the driver and driven hubs adjacent one another), a part of the ring portions adjacent such lobes may be eliminated so that the ring assumes a "C" shape, i.e., with open ends (the lobes may also be shortened in length adjacent to the open part of the "C"). This allows the disc pack to be readily removed from the coupling device for easy replacement of discs without having to disassemble the driving or driven coupling member from the respective shafts to which they are coupled. Obviously this could be done with discs having an inner ring such as in Figs. 5, 7 and 12, an outer ring such as in Fig. 11, or where both inner and outer rings are used as in Fig. 13. Such a configuration is shown for example in Fig. 11A, wherein the disc 558 is provided with an outer ring 560, and an opening 559 is provided by shortening the lobes 563 and 562, thus forming the ring 560 into a "C" shape.

## Claims

1. A flexible disc-like coupling element (58, 126, 126', 226, 358, 360, 558, 658, or 758) of the type having a hub portion (60, 131, 131', 228, 560, 660, 740, or 760) and connector portion means (65, 67, 69, 133, 133', 143, or 143') for connecting the hub portion (60, 131, 131', 228, 560, 660, 740, or 760) to other parts of the flexible disc-like coupling element (58, 126, 126', 226, 358, 360, 558, 658, or 758), the hub portion (60, 131, 131', 228, 560, 660, 740, or 760) at least partially defining and at least partially surrounding a central aperture,
**characterized** in that the flexible disc-like coupling element (58, 126, 126', 226, 358, 360, 558, 658, or 758) comprises: a plurality of lobes (62, 63, 64, 130, 130', 140, 140', 230, 240, 250, 362, 363, 364, 462, 463, 464, 562, 563, 564, 662, 663, 664, 665, 762, 763, or 764) spaced from the hub portion (60, 131, 131', 228, 560, 660, 740, or 760), each lobe (62, 63, 64, 130, 130', 140, 140', 230, 240, 250, 362, 363, 364, 462, 463, 464, 562, 563, 564, 662, 663, 664, 665, 762, 763, or 764) having corresponding connector portion means (65) which connect the lobe (62) to the hub portion (60), each lobe (62) consisting of a pair of substantially arcuate shaped arms (75 and 77) joined together adjacent its corresponding connector portion means (65, 67, 69, 133, 133', 143, or 143'), extending away from one another in substantially opposite directions, and terminating in free ends (68 and 68'), the free ends (68 and 68') of the arms (75 and 77, 86 and 87, or 96 and 97) having attachment means (70 and 70') for attaching the disc-like coupling element (58, 126, 126', 226, 358, 360, 558, 658, or 758) to a driving member and a driven member of a drive train apparatus, the attachment means (70, 70', 80, 80', 90, 90', 136, 136', 138, 138', 142, 142' 144, 144', 232, 234, 242, 244, 252, 254, 370, 372, 380, 382, 390, and 392) being configured to connect the disc-like coupling element (58, 126, 126', 226, 358, 360, 558, 658, or 758) in a first and a second operational configuration, the first configuration consisting of connecting the ends of both arms of one lobe (363, 562, 662, or 762) to the driving member and connecting the ends of both arms of another lobe (362, 564, 663, or 763) to the driven member, the second configuration consisting of connecting the end (68, 136, or 232) of one arm (75) of a particular lobe (62, 130, or 230) to the driving member and connecting the end (68', 138, or 234) of the other arm (77) of the particular lobe (62, 130, or 230) to the driven member.

2. The flexible disc-like coupling element (58, 126, 126', 226, 358, 360, 558, 658, or 758) of claim 1 wherein: the hub portion (60, 131, 131', 228, 560, 660, 740, or 760) comprises a radial dimension as defined from the central aperture, the hub portion (60, 131, 131', 228, 560, 660, 740, or 760) further comprises means for flexing across the radial dimension within the plane of the disc-like coupling element (58, 126, 126', 226, 358, 360, 558, 658, or 758); and each connector portion means (65, 67, 69, 133, 133', 143, or 143') is located and has a radial length between the hub portion (60, 131, 131', 228, 560, 660, 740, or 760) and the corresponding lobe (62, 63, 64, 130, 130', 140, 140', 230, 240, 250, 362, 363, 364, 462, 463, 464, 562, 563, 564, 662, 663, 664, 665, 762, 763, or 764) such that the corresponding lobe (62, 63, 64, 130, 130', 140, 140', 230, 240, 250, 362, 363, 364, 462, 463, 464, 562, 563, 564, 662, 663, 664, 665, 762, 763, or 764) is substantially proximate the hub portion (60, 131, 131', 228, 560, 660, 740, or 760), each connector portion means (65, 67, 69, 133, 133', 143, or 143') being substantially circumferentially rigid across the radial dimension of the hub portion (60, 131, 131', 228, 560, 660, 740, or 760).

3. The flexible disc-like coupling element (558) of claim 1 or 2 wherein the hub portion means for flexing comprises an arcuate member which forms an open-shaped (559) hub portion (560).

4. The flexible disc-like coupling element (558) of claims 1-3 wherein: the hub portion (560) comprises at least two members, each member having a first and a second end, the first end of one member being connected to the first end of another member, the second ends of the at least two members being separated so that the at least two members form an open shape; and one of the connector portion means is located adjacent the connected first ends of the at least two members and another one of the connector portion means is located adjacent the second end of each member.

5. The flexible disc-like coupling element (58, 126, 126', 226, 358, 360, 558, 658, or 758) of claim 1 or 2 wherein: the hub portion (60, 131, 131', 228, 560, 660, 740, or 760) comprises at least three members which form a closed shape surrounding the central aperture, each member having two ends, each end of each member being connected to the end of another member; and one of the connector portion means (65, 67, 69, 133, 133', 143, or 143') is located adjacent each pair of connected member ends.

6. The flexible disc-like coupling element (58, 126, 126', 358, 360, 558, 658, or 758) of any preceding claim wherein the hub portion (60, 131, 131', 560, 660, 740, or 760) comprises a closed-shaped annulus member.

7. The flexible disc-like coupling element (226) of any preceding claim wherein the hub portion (228) comprises a delta-shaped member (235, 245, 255).

8. The flexible disc-like coupling element (58, 126, 126', 226, 358, 360, 658, or 758) of any preceding claims wherein: the hub portion (60, 131, 131', 228, 660, or 740) comprises an inner hub portion; and the lobes (62, 63, 64, 130, 130', 140, 140', 230, 240, 250, 362, 363, 364, 462, 463, 464, 662, 663, 664, 665, 762, 763, or 764) are spaced outward from the inner hub portion outside the central aperture.

9. The flexible disc-like coupling element (558 or 758) of any preceding claims wherein: the hub portion (560 or 760) comprises an outer hub portion; and the lobes (562, 563, 564, 762, 763, or 764) are spaced inward from the outer hub portion within the central aperture.

10. The flexible disc-like coupling element (126 or 126') of any preceding claims further comprising at least one lug portion (135, 135', 137, or 137') connected to and extending away from the hub portion (131 or 131'), each lug portion (135, 135', 137, or 137') comprising attachment means (134, 134', 139, or 139') for attaching the disc-like coupling element (126 or 126') to other elements of the drive train apparatus.

11. A flexible coupling for joining a driving shaft (112 or 312) to a driven shaft (114 or 314) in a drive train apparatus of the type having a nominal axis of rotation, first (74 or 374) and second (76 or 376) coupling means for attachment to the driving (112 or 312) and the driven (114 or 314) shafts, and a flexible disc-like coupling element (58, 126, 126', 226, 358, 360, 558, 658, or 758), each coupling means (74, 76, 374, or 376) including first and second mounting mechanisms (102, 104, 106, 202, 204, 206, or 307) located radially from the nominal axis of rotation, the flexible disc-like coupling element (58, 126, 126', 226, 358, 360, 558, 658, or 758) having a hub portion (60, 131, 131', 228, 560, 660, 740, or 760) and connector portion means (65, 67, 69, 133, 133', 143, or 143') for connecting the hub portion (60, 131, 131', 228, 560, 660, 740, or 760) to other parts of the flexible disc-like coupling element (58, 126, 126', 226, 358, 360, 558, 658, or 758), the hub portion (60, 131, 131', 228, 560, 660, 740, or 760) at least partially defining and at least partially surrounding a central aperture,
**characterized** in that the flexible disc-like coupling element (58, 126, 126', 226, 358, 360, 558, 658, or 758) comprises: a plurality of lobes (62, 63, 64, 130, 130', 140, 140', 230, 240, 250, 362, 363, 364, 462, 463, 464, 562, 563, 564, 662, 663, 664, 665, 762, 763, or 764) spaced from the hub portion (60, 131, 131', 228, 560, 660, 740, or 760), each lobe (62, 63, 64, 130, 130', 140, 140', 230, 240, 250, 362, 363, 364, 462, 463, 464, 562, 563, 564, 662, 663, 664, 665, 762, 763, or 764) having corresponding connector portion means (65, 67, 69, 133, 133', 143, or 143') which connect the lobe (62, 63, 64, 130, 130', 140, 140', 230, 240, 250, 362, 363, 364, 462, 463, 464, 562, 563, 564, 662, 663, 664, 665, 762, 763, or 764) to the hub portion (60, 131, 131', 228, 560, 660, 740, or 760), each lobe (62, 63, 64, 130, 130', 140, 140', 230, 240, 250, 362, 363, 364, 462, 463, 464, 562, 563, 564, 662, 663, 664, 665, 762, 763, or 764) consisting of a pair of substantially arcuate shaped arms (75 and 77, 86 and 87, or 96 and 97) joined together adjacent its corresponding connector portion means (65, 67, or 69), extending away from one another in substantially opposite directions, and terminating in free ends (68 and 68'), the free ends (68 and 68') of the arms (75 and 77, 86 and 87, or 96 and 97) having attachment means (70 and 70') for attaching the disc-like coupling element (58, 126, 126', 226, 358, 360, 558, 658, or 758) to the first (74 or 374) and second (76 or 376) coupling means, the attachment means (70, 70', 80, 80', 90, 90', 136, 136', 138, 138', 142, 142' 144, 144', 232, 234, 242, 244, 252, 254, 370, 372, 380, 382, 390, and 392) being configured to connect the disc-like coupling element (58, 126, 126', 226, 358, 360, 558, 658, or 758) in a first and a second operational configuration, the first configuration consisting of connecting the ends of both arms (380 and 382) of one lobe (363, 562, 662, or 762) to the first coupling means (320, 374, or 376) and connecting the ends of both arms (370 and 372) of another lobe (362, 564, 663, or 763) to the second coupling means (320, 374, or 376), the second configuration consisting of connecting the end (68, 136, or 232) of one arm (75) of a particular lobe (62, 130, or 230) to the first coupling means (74 or 76) and connecting the end (68', 138, or 234) of the other arm (77) of the particular lobe (62, 130, or 230) to the second coupling means (74 or 76).

12. The flexible coupling of claim 11 of the type further having intermediate coupling means (320) for providing an intermediate coupling between the first (300) and second (376) coupling means, the intermediate coupling means (320) including first (326 or 322) and second (324 or 328) mounting mechanisms located radially from the nominal axis of rotation, a first flexible disc-like coupling element (358) adapted to be operatively located in between the first (74, 374) and the intermediate (320) coupling means, and a second flexible disc-like coupling element (360) adapted to be operatively located in between the intermediate (320) and the second (76, 376) coupling means, **characterized** in that the attachment means (70, 70', 80, 80', 90, 90', 136, 136', 138, 138', 142, 142', 144, 144', 232, 234, 242, 244, 252, 254, 370, 372, 380, 382, 390, and 392) is configured to connect each disc-like coupling element (58, 126, 126', 226, 358, 360, 558, 658, or 758) in a first and a second operational configuration, the first configuration consisting of connecting the ends of both arms (380 and 382) of one lobe (363, 562, 662, or 762) to one coupling means (320, 374, or 376) and connecting the ends of both arms (370 and 372) of another lobe (362, 564, 663, or 763) to another coupling means (320, 374, or 376), the second configuration consisting of connecting the end (68, 136, or 232) of one arm (75) of a particular lobe (62, 130, or 230) to one coupling means (74 or 76) and connecting the end (68', 138, or 234) of the other arm (77) of the particular lobe (62, 130, or 230) to another coupling means (74 or 76).

13. The flexible coupling of claims 11 or 12 wherein each flexible disc-like coupling element (126 or 126') further comprises at least one lug portion (135, 135', 137, or 137') connected to and extending away from the hub portion (131 or 131'), each lug portion (135, 135', 137, or 137') comprising attachment means (134, 134', 139, or 139') for attaching the disc-like coupling element (126 or 126') to other elements of the drive train apparatus.

14. The flexible coupling of claim 11, 12, or 13 further comprising a plurality of disc-like coupling elements (58, 126, 126', 226, 358, 360, 558, 658, or 758) which are assembled to form a disc pack (158, 358, or 360) having a closed-shaped hub portion (60, 131, 131', 228, 560, 660, 740, or 760) and which are located between two coupling means (74, 76, 320, 374, or 376), each disc-like coupling element (58, 126, 126', 226, 358, 360, 558, 658, or 758) overlying another disc-like coupling element (58, 126, 126', 226, 358, 360, 558, 658, or 758) of the disc pack such that the attachment means (70, 70', 80, 80', 90, 90', 136, 136', 138, 138', 142, 142' 144, 144', 232, 234, 242, 244, 252, 254, 370, 372, 380, 382, 390, and 392) of each disc-like coupling element (58, 126, 126', 226, 358, 360, 558, 658, or 758) are substantially aligned with the attachment means (70, 70', 80, 80', 90, 90', 136, 136', 138, 138', 142, 142' 144, 144', 232, 234, 242, 244, 252, 254, 370, 372, 380, 382, 390, and 392) of another disc-like coupling element (58, 126, 126', 226, 358, 360, 558, 658, or 758).

15. The flexible coupling of claim 11, 12, or 13 further comprising a plurality of disc-like coupling elements (58, 126, 126', 358, 360, 558, 658, or 758) which are assembled to form a disc pack (158, 358, or 360) having an open-shaped (559) hub portion (560) and which are located between the two coupling means (74, 76, 320, 374, or 376) each disc-like coupling element (58, 126, 126', 358, 360, 558, 658, or 758) overlying another disc-like coupling element (58, 126, 126', 226, 358, 360, 558, 658, or 758) of the disc pack such that the attachment means (70, 70', 80, 80', 90, 90', 136, 136', 138, 138', 142, 142' 144, 144', 370, 372, 380, 382, 390, or 392) of each disc-like coupling element (58, 126, 126', 358, 360, 558, 658, or 758) are substantially aligned with the attachment means (70, 70', 80, 80', 90, 90', 136, 136', 138, 138', 142, 142' 144, 144', 370, 372, 380, 382, 390, or 392) of another disc-like coupling element (58, 126, 126', 358, 360, 558, 658, or 758).

16. The flexible coupling of claim 11, 12, or 13 connected in the first configuration wherein: both arms (380 and 382) of a first lobe (363, 562, 662, or 762) are connected respectively to the first and second mounting mechanisms (307, 326 and 324, or 322 and 328) of one coupling means (320, 374, or 376) ; and both arms (370 and 372) of a second lobe (362, 564, 663, or 763) are connected respectively to the first and second mounting mechanisms (307, 326 and 324, or 322 and 328) of another coupling means (320, 374, or 376).

17. The flexible coupling of claim 11, 12, or 13 connected in the second configuration wherein: one arm (75) of a particular lobe (62, 130, or 230) is connected to the first mounting mechanism (102, 104, 106, 202, 204, or 206) of one coupling means (74 or 76); and the other arm (77) of the particular lobe (62, 130, or 230) is connected to the first mounting mechanism (102, 104, 106, 202, 204, or 206) of another coupling means (74 or 76).

18. The flexible coupling of claim 13 connected by the attachment means (136', 138', 142', and 144') in a third operational configuration wherein: both arms (136' and 138') of one lobe (130') of the first disc-like coupling element (126') are connected respectively to the first and second mounting mechanisms (307) of the first coupling means (374); the at least one lug (137') of the first disc-like coupling element (126') is connected to the first mounting mechanism (326 or 322) of the intermediate coupling means (320); the at least one lug of the second disc-like coupling element is connected to the second mounting mechanism (324 or 328) of the intermediate coupling means (320); and both arms of one lobe of the second disc-like coupling element are connected respectively to the first and second mounting mechanisms (307) of the second coupling means (376).

## Patentansprüche

1. Elastisches, scheibenartiges Kupplungselement (58, 126, 126', 226, 358, 360, 558, 658 oder 758), das einen Nabenabschnitt (60, 131, 131', 228, 560, 660, 740 oder 760) und Verbindungsabschnittelemente (65, 67, 69, 133, 133', 143 oder 143') zum Verbinden des Nabenabschnittes (60, 131, 131', 228, 560, 660, 740 oder 760) mit anderen Teilen des elastischen, scheibenartigen Kupplungselementes (58, 126, 126', 226, 358, 360, 558, 658 oder 758) besitzt, wobei der Nabenabschnitt (60, 131, 131', 228, 560, 660, 740 oder 760) mindestens teilweise eine mittige Öffnung definiert und diese mindestens teilweise umgibt,
dadurch gekennzeichnet, daß das elastische, scheibenartige Kupplungselement (58, 126, 126', 226, 358, 360, 558, 658 oder 758) umfaßt: eine Vielzahl von von dem Nabenabschnitt (60, 131, 131', 228, 560, 660, 740 oder 760) abgeteilten Nocken (62, 63, 64, 130, 130', 140, 140', 230, 240, 250, 362, 363, 364, 462, 463, 464, 562, 563, 564, 662, 663, 664, 665, 762, 763 oder 764), wobei jeder Nocken (62, 63, 64, 130, 130', 140, 140', 230, 240, 250, 362, 363, 364, 462, 463, 464, 562, 563, 564, 662, 663, 664, 665, 762, 763 oder 764) entsprechende Verbindungsabschnittelemente (65) besitzt, die den Nocken (62) mit dem Nabenabschnitt (60) verbinden, jeder Nocken (62) aus einem Paar im wesentlichen bogenförmiger Arme (75 und 77) besteht, die an ihren entsprechenden Verbindungsabschnittelementen (65, 67, 69, 133, 133', 143 oder 143') angrenzend miteinander verbunden sind, sich in im wesentlichen entgegengesetzte Richtungen voneinander weg erstrecken und in freien Enden (68 und 68') enden, wobei die freien Enden (68 und 68') der Arme (75 und 77, 86 und 87 oder 96 und 97) Befestigungsmittel (70 und 70') zum Befestigen des scheibenartigen Kupplungselementes (58, 126, 126', 226, 358, 360, 558, 658 oder 758) an einem Antriebsglied und einem Abtriebsglied einer Antriebsstrangvorrichtung besitzen, die Befestigungsmittel (70, 70', 80, 80', 90, 90', 136, 136', 138, 138', 142, 142', 144, 144', 232, 234, 242, 244, 252, 254, 370, 372, 380, 382, 390 und 392) gestaltet sind, um das scheibenartige Kupplungselement (58, 126, 126', 226, 358, 360, 558, 658 oder 758) in einer ersten und zweiten funktionellen Konfiguration zu verbinden, wobei die erste Konfiguration in dem Verbinden der Enden beider Arme eines Nockens (363, 562, 662 oder 762) mit dem Antriebsglied und Verbinden der Enden beider Arme eines anderen Nockens (362, 564, 663 oder 763) mit dem Abtriebsglied besteht, die zweite Konfiguration in dem Verbinden des Endes (68, 136 oder 232) eines Armes (75) eines bestimmten Nockens (62, 130 oder 230) mit dem Antriebsglied und Verbinden des Endes (68', 138 oder 234) des anderen Armes (77) des bestimmten Nockens (62, 130 oder 230) mit dem Abtriebsglied besteht.

2. Elastisches, scheibenartiges Kupplungselement (58, 126, 126', 226, 358, 360, 558, 658 oder 758) nach Anspruch 1, bei dem: der Nabenabschnitt (60, 131, 131', 228, 560, 660, 740 oder 760) eine von der mittigen Öffnung definierte, radiale Ausdehnung umfaßt und der Nabenabschnitt (60, 131, 131', 228, 560, 660, 740 oder 760) außerdem Mittel umfaßt, um sich in der Ebene des scheibenartigen Kupplungselementes (58, 126, 126', 226, 358, 360, 558, 658 oder 758) über die radiale Ausdehnung zu biegen; und jedes Verbindungsabschnittelement (65, 67, 69, 133, 133', 143 oder 143') eine radiale Länge zwischen dem Nabenabschnitt (60, 131, 131', 228, 560, 660, 740 oder 760) und dem entsprechenden Nocken (62, 63, 64, 130, 130', 140, 140', 230, 240, 250, 362, 363, 364, 462, 463, 464, 562, 563, 564, 662, 663, 664, 665, 762, 763 oder 764) besitzt und dort gelegen ist, so daß der entsprechende Nocken (62, 63, 64, 130, 130', 140, 140', 230, 240, 250, 362, 363, 364, 462, 463, 464, 562, 563, 564, 662, 663, 664, 665, 762, 763 oder 764) im wesentlichen dicht an dem Nabenabschnitt (60, 131, 131', 228, 560, 660, 740 oder 760) ist, wobei jedes Verbindungsabschnittelement (65, 67, 69, 133, 133', 143 oder 143') über die radiale Ausdehnung des Nabenabschnittes (60, 131, 131', 228, 560, 660, 740 oder 760) im wesentlichen peripher steif ist.

3. Elastisches, scheibenartiges Kupplungselement (558) nach Anspruch 1 oder 2, bei dem das Nabenabschnittelement zum Durchbiegen ein bogenförmiges Teil umfaßt, das einen offen ausgebildeten (559) Nabenabschnitt (560) bildet.

4. Elastisches, scheibenartiges Kupplungselement (558) nach den Ansprüchen 1-3, bei dem: der Nabenabschnitt (560) mindestens zwei Teile umfaßt, wobei jedes Teil ein erstes und zweites Ende besitzt, das erste Ende eines Teiles mit dem ersten Ende eines anderen Teiles verbunden ist, die zweiten Enden von den mindestens zwei Teilen getrennt sind, so daß die mindestens zwei Teile eine offene Form bilden; und eines der Verbindungsabschnittelemente an den verbundenen ersten Enden der mindestens zwei Teile angrenzend gelegen ist und ein anderes der Verbindungsabschnittelemente an den zweiten Enden jedes Teiles angrenzend gelegen ist.

5. Elastisches, scheibenartiges Kupplungselement (58, 126, 126', 226, 358, 360, 558, 658 oder 758) nach Anspruch 1 oder 2, bei dem: der Nabenabschnitt (60, 131, 131', 228, 560, 660, 740 oder 760) mindestens drei Teile umfaßt, die eine die mittige Öffnung umgebende, geschlossene Form bilden, wobei jedes Teil zwei Enden besitzt, jedes Ende jedes Teiles mit dem Ende eines anderen Teiles verbunden ist; und eines der Verbindungsabschnittelemente (65, 67, 69, 133, 133', 143 oder 143') an jedem Paar der verbundenen Teilenden angrenzend gelegen ist.

6. Elastisches, scheibenartiges Kupplungselement (58, 126, 126', 358, 360, 558, 658 oder 758) nach einem vorhergehenden Anspruch, bei dem der Nabenabschnitt (60, 131, 131', 560, 660, 740 oder 760) ein geschlossenes Ringteil umfaßt.

7. Elastisches, scheibenartiges Kupplungselement (226) nach einem vorhergehenden Anspruch, bei dem der Nabenabschnitt (228) ein dreieckförmiges Teil (235, 245, 255) umfaßt.

8. Elastisches, scheibenartiges Kupplungselement (58, 126, 126', 226, 358, 360, 558, 658 oder 758) nach den vorhergehenden Ansprüchen, bei dem: der Nabenabschnitt (60, 131, 131', 660 oder 740) einen inneren Nabenabschnitt umfaßt; und die Nocken (62, 63, 64, 130, 130', 140, 140', 230, 240, 250, 362, 363, 364, 462, 463, 464, 662, 663, 664, 665, 762, 763 oder 764) außerhalb der mittigen Öffnung vom inneren Nabenabschnitt nach außen abgeteilt sind.

9. Elastisches, scheibenartiges Kupplungselement (558 oder 758) nach den vorhergehenden Ansprüchen, bei dem: der Nabenabschnitt (560 oder 570) einen äußeren Nabenabschnitt umfaßt; und die Nocken (562, 563, 564, 762, 763 oder 764) innerhalb der mittigen Öffnung von dem äußeren Nabenabschnitt nach innen abgeteilt sind.

10. Elastisches, scheibenartiges Kupplungselement (126 oder 126') nach den vorhergehenden Ansprüchen, das außerdem mindestens einen Mitnehmerabschnitt (135, 135', 137 oder 137') umfaßt, der an dem Nabenabschnitt (131 oder 131') befestigt ist und sich von diesem weg erstreckt, wobei jeder Mitnehmerabschnitt (135, 135', 137 oder 137') Befestigungsmittel (134, 134', 139 oder 139') zum Befestigen des scheibenartigen Kupplungselementes (126 oder 126') an anderen Elementen der Antriebsstrangvorrichtung umfaßt.

11. Elastische Kupplung zum Verbinden einer Antriebswelle (112 oder 312) mit einer Abtriebswelle (114 oder 314) in einer Antriebsstrangvorrichtung, die eine Nominalrotationsachse, erste (74 oder 374) und zweite (76 oder 376) Kupplungsmittel zur Befestigung an der Antriebswelle (112 oder 312) und der Abtriebswelle (114 oder 314) und ein elastisches, scheibenartiges Kupplungselement (58, 126, 126', 226, 358, 360, 558, 658 oder 758) besitzt, wobei jedes Kupplungsmittel (74, 76, 374 oder 376) radial von der Nominalrotationsachse gelegene, erste und zweite Befestigungsmechanismen (102, 104, 106, 202, 204, 206 oder 307) umfaßt, das elastische, scheibenartige Kupplungselement (58, 126, 126', 226, 358, 360, 558, 658 oder 758) einen Nabenabschnitt (60, 131, 131', 228, 560, 660, 740 oder 760) und Verbindungsabschnittelemente (65, 67, 69, 133, 133', 143 oder 143') zum Verbinden des Nabenabschnittes (60, 131, 131', 228, 560, 660, 740 oder 760) mit anderen Teilen des elastischen, scheibenartigen Kupplungselementes (58, 126, 126', 226, 358, 360, 558, 658 oder 758) besitzt, wobei der Nabenabschnitt (60, 131, 131', 228, 560, 660, 740 oder 760) mindestens teilweise eine mittige Öffnung definiert und diese mindestens teilweise umgibt,
dadurch gekennzeichnet, daß das elastische, scheibenartige Kupplungselement (58, 126, 126', 226, 358, 360, 558, 658 oder 758) umfaßt: eine Vielzahl von von dem Nabenabschnitt (60, 131, 131', 228, 560, 660, 740 oder 760) abgeteilten Nocken (62, 63, 64, 130, 130', 140, 140', 230, 240, 250, 362, 363, 364, 462, 463, 464, 562, 563, 564, 662, 663, 664, 665, 762, 763 oder 764), wobei jeder Nocken (62, 63, 64, 130, 130', 140, 140', 230, 240, 250, 362, 363, 364, 462, 463, 464, 562, 563, 564, 662, 663, 664, 665, 762, 763 oder 764) entsprechende Verbindungsabschnittelemente (65, 67, 69, 133, 133', 143, oder 143') besitzt, die den Nocken (62, 63, 64, 130, 130', 140, 140', 230, 240, 250, 362, 363, 364, 462, 463, 464, 562, 563, 564, 662, 663, 664, 665, 762, 763 oder 764) mit dem Nabenabschnitt (60, 131, 131', 228, 560, 660, 740 oder 760) verbinden, jeder Nocken (62, 63, 64, 130, 130', 140, 140', 230, 240, 250, 362, 363, 364, 462, 463, 464, 562, 563, 564, 662, 663, 664, 665, 762, 763 oder 764) aus einem Paar im wesentlichen bogenförmiger Arme (75 und 77, 86 und 87 oder 96 und 97) besteht, die an ihren entsprechenden Verbindungsabschnittelementen (65, 67 oder 69) angrenzend miteinander verbunden sind, sich in im wesentlichen entgegengesetzte Richtungen voneinander weg erstrecken und in freien Enden (68 und 68') enden, wobei die freien Enden (68 und 68') der Arme (75 und 77, 86 und 87 oder 96 und 97) Befestigungsmittel (70 und 70') zum Befestigen des scheibenartigen Kupplungselementes (58, 126, 126', 226, 358, 360, 558, 658 oder 758) an dem ersten (74 oder 374) und zweiten (76 oder 376) Kupplungsmittel besitzen, die Befestigungsmittel (70, 70', 80, 80', 90, 90', 136, 136', 138, 138', 142, 142', 144, 144', 232, 234, 242, 244, 252, 254, 370, 372, 380, 382, 390 und 392) gestaltet sind, um das scheibenartige Kupplungselement (58, 126, 126', 226, 358, 360, 558, 658 oder 758) in einer ersten und zweiten funktionellen Konfiguration zu verbinden, wobei die erste Konfiguration in dem Verbinden der Enden beider Arme (380 und 382) eines Nockens (363, 562, 662 oder 762) mit dem ersten Kupplungsmittel (320, 374 oder 376) und Verbinden der Enden beider Arme (370 und 372) eines anderen Nockens (362, 564, 663 oder 763) mit dem zweiten Kupplungsmittel (320, 374 oder 376) besteht, die zweite Konfiguration in dem Verbinden des Endes (68, 136 oder 232) eines Armes (75) eines bestimmten Nockens (62, 130 oder 230) mit dem ersten Kupplungsmittel (74 oder 76) und Verbinden des Endes (68', 138 oder 234) des anderen Armes (77) des bestimmten Nockens (62, 130 oder 230) mit dem zweiten Kupplungsmittel (74 oder 76) besteht.

12. Elastische Kupplung nach Anspruch 11, die außerdem intermediäre Kupplungsmittel (320) zum Vorsehen einer intermediären Kupplung zwischen den ersten (300) und zweiten (376) Kupplungsmitteln besitzt, wobei die intermediären Kupplungsmittel (320) radial von der Nominalrotationsachse gelegene, erste (326 oder 322) und zweite (324 oder 328) Befestigungsmechanismen, ein erstes elastisches, scheibenartiges Kupplungselement (358), das angepaßt ist, um funktionell zwischen dem ersten (74, 374) und dem intermediären (320) Kupplungsmittel angeordnet zu werden, und ein zweites elastisches, scheibenartiges Kupplungselement (360), das angepaßt ist, um funktionell zwischen dem intermediären (320) und dem zweiten (76, 376) Kupplungsmittel angeordnet zu werden, umfassen,
dadurch gekennzeichnet, daß das Befestigungsmittel (70, 70', 80, 80', 90, 90', 136, 136', 138, 138', 142, 142', 144, 144', 232, 234, 242, 244, 252, 254, 370, 372, 380, 382, 390 und 392) gestaltet ist, um jedes scheibenartige Kupplungselement (58, 126, 126', 226, 358, 360, 558, 658 oder 758) in einer ersten und zweiten funktionellen Konfiguration zu verbinden, wobei die erste Konfiguration in dem Verbinden der Enden beider Arme (380 und 382) eines Nockens (363, 562, 662 oder 762) mit einem Kupplungsmittel (320, 374 oder 376) und Verbinden der Enden beider Arme (370 und 372) eines anderen Nockens (362, 564, 663 oder 763) mit einem anderen Kupplungsmittel (320, 347 oder 376) besteht, die zweite Konfiguration in dem Verbinden des Endes (68, 136 oder 232) eines Armes (75) eines bestimmten Nockens (62, 130 oder 230) mit einem Kupplungsmittel (74 oder 76) und Verbinden des Endes (68', 138 oder 234) des anderen Armes (77) des bestimmten Nockens (62, 130 oder 230) mit einem anderen Kupplungsmittel (74 oder 76) besteht.

13. Elastische Kupplung nach Anspruch 11 oder 12, bei der jedes elastische, scheibenartige Kupplungselement (126 oder 126') außerdem mindestens einen Mitnehmerabschnitt (135, 135', 137 oder 137') umfaßt, der mit dem Nabenabschnitt (131 oder 131') verbunden ist und sich von diesem weg erstreckt, wobei jeder Mitnehmerabschnitt (135, 135', 137 oder 137') Befestigungsmittel (134, 134', 139 oder 139') zum Befestigen des scheibenartigen Kupplungselementes (126 oder 126') an anderen Elementen der Antriebsstrangvorrichtung umfaßt.

14. Elastische Kupplung nach Anspruch 11, 12 oder 13, die außerdem eine Vielzahl von scheibenartigen Kupplungselementen (58, 126, 126', 226, 358, 360, 558, 658 oder 758) umfaßt, die zusammengebaut sind, um einen Plattensatz (158, 358 oder 360) zu bilden, die einen geschlossenen Nabenabschnitt (60, 131, 131', 228, 560, 660, 740 oder 760) besitzen und zwischen zwei Kupplungsmitteln (74, 76, 320, 374 oder 376) gelegen sind, wobei jedes scheibenartige Kupplungselement (58, 126, 126', 226, 358, 360, 558, 658 oder 758) über einem anderen scheibenartigen Kupplungselement (58, 126, 126', 226, 358, 360, 558, 658 oder 758) des Plattensatzes liegt, so daß die Befestigungsmittel (70, 70', 80, 80', 90, 90', 136, 136', 138, 138', 142, 142', 144, 144', 232, 234, 242, 244, 252, 254, 370, 372, 380, 382, 390 und 392) jedes scheibenartigen Kupplungselementes (58, 126, 126', 226, 358, 360, 558, 658 oder 758) im wesentlichen mit den Befestigungsmitteln (70, 70', 80, 80', 90, 90', 136, 136', 138, 138', 142, 142', 144, 144', 232, 234, 242, 244, 252, 254, 370, 372, 380, 382, 390 und 392) eines anderen scheibenartigen Kupplungselementes (58, 126, 126', 226, 358, 360, 558, 658 oder 758) fluchten.

15. Elastische Kupplung nach Anspruch 11, 12 oder 13, die außerdem eine Vielzahl von scheibenartigen Kupplungselementen (58, 126, 126', 358, 360, 558, 658 oder 758) umfaßt, die zusammengebaut sind, um einen Plattensatz (158, 358 oder 360) zu bilden, die einen offen ausgebildeten (559) Nabenabschnitt (560) besitzen und zwischen den beiden Kupplungsmitteln (74, 76, 320, 374 oder 376) gelegen sind, wobei jedes scheibenartige Kupplungslement (58, 126, 126', 358, 360, 558, 658 oder 758) über einem anderen scheibenartigen Kupplungselement (58, 126, 126', 226, 358, 360, 558, 658 oder 758) des Plattensatzes liegt, so daß die Befestigungsmittel (70, 70', 80, 80', 90, 90', 136, 136', 138, 138', 142, 142', 144, 144', 370, 372, 380, 382, 390 und 392) jedes scheibenartigen Kupplungselementes (58, 126, 126', 358, 360, 558, 658 oder 758) im wesentlichen mit den Befestigungsmitteln (70, 70', 80, 80', 90, 90', 136, 136', 138, 138', 142, 142', 144, 144', 370, 372, 380, 382, 390 und 392) eines anderen scheibenartigen Kupplungselementes (58, 126, 126', 358, 360, 558, 658 oder 758) fluchten.

16. Elastische Kupplung nach Anspruch 11, 12 oder 13, verbunden in der ersten funktionellen Konfiguration, bei der: beide Arme (380 und 382) eines ersten Nockens (363, 562, 662 oder 762) jeweils mit den ersten und zweiten Befestigungsmechanismen (307, 326 und 324 oder 322 und 328) eines Kupplungsmittels (320, 374 oder 376) verbunden sind; und beide Arme (370 und 372) eines zweiten Nockens (362, 564, 663 oder 763) jeweils mit den ersten und zweiten Befestigungsmechanismen (307, 326 und 324 oder 322 und 328) eines anderen Kupplungsmittels (320, 374 oder 376) verbunden sind.

17. Elastische Kupplung nach Anspruch 11, 12 oder 13, verbunden in der zweiten funktionellen Konfiguration, bei der: ein Arm (75) eines bestimmten Nockens (62, 130 oder 230) mit dem ersten Befestigungsmechanismus (102, 104, 106, 202, 204 oder 206) eines Kupplungselementes (74 oder 76) verbunden ist; und der andere Arm (77) des bestimmten Nockens (62, 130 oder 230) mit dem ersten Befestigungsmechanismus (102, 104, 106, 202, 204 oder 206) eines anderen Kupplungselementes (74 oder 76) verbunden ist.

18. Elastische Kupplung nach Anspruch 13, die durch die Befestigungsmittel (136', 138', 142' und 144') in einer dritten funktionellen Konfiguration verbunden ist, bei der: beide Arme (136' und 138') eines Nokkens (130') des ersten scheibenartigen Kupplungselementes (126') jeweils mit den ersten und zweiten Befestigungsmechanismen (307) des ersten Kupplungsmittels (374) verbunden sind; der mindestens eine Mitnehmer (137') des ersten scheibenartigen Kupplungselementes (126')mit dem ersten Befestigungsmechanismus (326 oder 322) des intermediären Kupplungsmittels (320) verbunden ist; der mindestens eine Mitnehmer des zweiten scheibenartigen Kupplungselementes mit dem zweiten Befestigungsmechanismus (324 oder 328) des intermediären Kupplungsmittels (320) verbunden ist; und beide Arme eines Nockens des zweiten scheibenartigen Kupplungslementes jeweils mit den ersten und zweiten Befestigungsmechanismen (307) des zweiten Kupplungsmittels (376) verbunden sind.

## Revendications

1. Raccord flexible de jonction en forme de disque (58, 126, 126', 226, 358, 360, 558, 658 ou 758) du type ayant une partie formant moyeu (60, 131, 131', 228, 560, 660, 740 ou 760) et des moyens de jonction de partie (65, 67, 69, 133, 133', 143, ou 143') pour relier la partie formant moyeu (60, 131, 131', 228, 560, 660, 740 ou 760) à d'autres parties du raccord flexible de jonction en forme de disque (58, 126, 126', 226, 358, 360, 558, 658 ou 758), la partie formant moyeu (60, 131, 131', 228, 560, 660, 740 ou 760) définissant au moins partiellement et entourant au moins partiellement une ouverture centrale,
caractérisé en ce que le raccord flexible de jonction en forme de disque (58, 126, 126', 226, 358, 360, 558, 658 ou 758) comprend : une pluralité de lobes (62, 63, 64, 130, 130', 140, 140', 230, 240, 250, 362, 363, 364, 462, 463, 464, 562, 563, 564, 662, 663, 664, 665, 762, 763 ou 764) espacés de la partie formant moyeu (60, 131, 131', 228, 560, 660, 740 ou 760), chaque lobe (62, 63, 64, 130, 130', 140, 140', 230, 240, 250, 362, 363, 364, 462, 463, 464, 562, 563, 564, 662, 663, 664, 665, 762, 763 ou 764) ayant des moyens de jonction de parties correspondants (65) qui relient le lobe (62) à la partie formant moyeu (60), chaque lobe (62) consistant en une paire de bras substantiellement arqués (75 et 77) reliés l'un à l'autre contigus à son moyen de jonction de partie correspondant (65, 67, 69, 133, 133', 143 ou 143'), s'éloignant l'un de l'autre dans des directions substantiellement opposées, et se terminant par des extrémités libres (68 et 68'), les extrémités libres (68 et 68') des bras (75 et 77, 86 et 87 ou 96 et 97) ayant un moyen de fixation (70 et 70') pour fixer le raccord de jonction en forme de disque (58, 126, 126', 226, 358, 360, 558, 658 ou 758) à un organe menant et un organe mené d'un appareil à engrenage menant, les moyens de fixation (70, 70', 80, 80', 90, 90', 136, 136', 138, 138', 142, 142', 144, 144', 232, 234, 242, 244, 252, 254, 370, 372, 380, 382, 390 et 392) étant configurés pour monter le raccord de jonction en forme de disque (58, 126, 126', 226, 358, 360, 558, 658 ou 758) dans une première et seconde configurations opérationnelles, la première configuration consistant à relier les extrémités des deux bras d'un lobe (363, 562, 662 ou 762) et relier les extrémités des deux bras d'un autre lobe (362, 564, 663 ou 763) à l'organe mené, la seconde configuration consistant à relier l'extrémité (68, 136 ou 232) d'un bras (75) d'un lobe particulier (62, 130 ou 230) à l'organe menant et à relier l'extrémité (68', 138 ou 234) de l'autre bras (77) du lobe particulier (62, 130 ou 230) à l'organe mené.

2. Raccord flexible de jonction en forme de disque (58, 126, 126', 226, 358, 360, 558, 658 ou 758) selon la revendication 1 dans lequel : la partie formant moyeu (60, 131, 131', 228, 560, 660, 740 ou 760) comprend une dimension radiale définie depuis l'ouverture centrale, la partie formant moyeu (60, 131, 131', 228, 560, 660, 740 ou 760) comprend de plus des moyens de flexion à travers la dimension radiale à l'intérieur du plan du raccord de jonction en forme de disque (58, 126, 126', 226, 358, 360, 558, 658 ou 758) ; et chaque moyen de jonction de partie (65, 67, 69, 133, 133', 143 ou 143') est situé et présente une longueur radiale entre la partie formant moyeu (60, 131, 131', 228, 560, 660, 740 ou 760) et le lobe correspondant (62, 63, 64, 130, 130', 140, 140', 230, 240, 250, 362, 363, 364, 462, 463, 464, 562, 563, 564, 662, 663, 664, 665, 762, 763 ou 764) tel que le lobe correspondant (62, 63, 64, 130, 130', 140, 140', 230, 240, 250, 362, 363, 364, 462, 463, 464, 562, 563, 564, 662, 663, 664, 665, 762, 763 ou 764) est substantiellement proche de la partie formant moyeu (60, 131, 131', 228, 560, 660, 740 ou 760), chaque moyen de jonction de partie (65, 67, 69, 133, 133', 143, 143') étant substantiellement rigide en circonférence à travers la dimension radiale de la partie formant moyeu (60, 131, 131', 228, 560, 660, 740 ou 760).

3. Raccord flexible de jonction en forme de disque (558) selon la revendication 1 ou 2, dans lequel les moyens de flexion de la partie formant moyeu comprennent un organe arqué qui définit une partie formant moyeu (560) de forme ouverte (559).

4. Raccord flexible de jonction en forme de disque (558) selon les revendications 1 à 3 dans lequel : la partie formant moyeu (560) comprend aux moins deux organes, chaque organe ayant une première extrémité et une seconde extrémité, la première extrémité d'un organe étant reliée à la première extrémité d'un autre organe, les secondes extrémités des deux organes au moins étant séparées afin que les deux organes au moins définissent une forme ouverte ; et un des moyens de jonction de partie est situé à proximité des premières extrémités reliées aux deux organes au moins et un autre des moyens de jonction de partie est situé à proximité de la seconde extrémité de chaque organe.

5. Raccord flexible de jonction en forme de disque (58, 126, 126', 226, 358, 360, 558, 658 ou 758) selon la revendication 1 ou 2 dans lequel : la partie formant moyeu (60, 131, 131', 228, 560, 660, 740 ou 760) comprend au moins trois organes qui définissent une forme fermée entourant l'ouverture centrale, chaque organe ayant deux extrémités, chaque extrémité de chaque organe étant relié à l'extrémité d'un autre organe ; et un des moyens de jonction de partie (65, 67, 69, 133, 133', 143 ou 143') est situé à proximité de chaque paire d'extrémités d'organes montée.

6. Raccord flexible de jonction en forme de disque (58, 126, 126', 226, 358, 360, 558, 658 ou 758) selon l'une quelconque des revendications précédentes dans lequel la partie formant moyeu (60, 131, 131', 228, 560, 660, 740 ou 760) comprend un organe en couronne de forme fermée.

7. Raccord flexible de jonction en forme de disque (226) selon l'une quelconque des revendications précédentes, dans lequel la partie formant moyeu (228) comprend un organe en forme de delta (235, 245, 255).

8. Raccord flexible de jonction en forme de disque (58, 126, 126', 226, 358, 360, 558, 658 ou 758) selon l'une quelconque des revendications précédentes, dans lequel : la partie formant moyeu (60, 131, 131', 660, 740 ou 760) comprend une partie formant moyeu interne, et les lobes (62, 63, 64, 130, 130', 140, 140', 230, 240, 250, 362, 363, 364, 462, 463, 464, 662, 663, 664, 665, 762, 763 ou 764) sont espacés vers l'extérieur depuis la partie formant moyeu à l'extérieur de l'ouverture centrale.

9. Raccord flexible de jonction en forme de disque (558 ou 758) selon l'une quelconque des revendications précédentes,dans lequel la partie formant moyeu (560 ou 760) comprend une partie formant moyeu externe, et les lobes (562, 563, 564, 762, 763 ou 764) sont espacés vers l'intérieur depuis la partie formant moyeu externe à l'intérieur de l'ouverture centrale.

10. Raccord flexible de jonction en forme de disque (126 ou 126') selon l'une quelconque des revendications précédentes,comprenant de plus au moins une partie formant écrou (135, 135', 137 ou 137') reliée à et s'éloignant de la partie formant moyeu (131 ou 131'), chaque partie formant écrou (135, 135', 137 ou 137') comprenant des moyens de fixation (134, 134', 139 ou 139') pour fixer le raccord de jonction en forme de disque (126 ou 126') aux autres raccords de l'appareil à engrenage menant.

11. Jonction flexible pour joindre un arbre de menant (112 ou 312) à un arbre mené (114 ou 314) dans un appareil à engrenage menant du type ayant un axe nominal de rotation, un premier (74 ou 374) et un second (76 ou 376) moyens de jonction pour fixer aux arbres menant (112 ou 312) et mené (114 ou 314), et un raccord flexible de jonction en forme de disque (58, 126, 126', 226, 358, 360, 558, 658 ou 758), chaque moyen de jonction (74, 76, 374 ou 376) comprenant un premier et un second mécanismes de montage (102, 104, 106, 202, 204, 206 ou 307) situés de manière radiale depuis l'axe nominal de rotation, le raccord flexible de jonction en forme de disque (58, 126, 126', 226, 358, 360, 558, 658 ou 758) ayant une partie formant moyeu (60, 131, 131', 228, 560, 660, 740 ou 760) et des moyens de jonction de partie (65, 67, 69, 133, 133', 143 ou 143') pour relier la partie formant moyeu (60, 131, 131', 228, 560, 660, 740 ou 760) aux autres parties du raccord flexible de jonction en forme de disque (58, 126, 126', 226, 358, 360, 558, 658 ou 758), la partie formant moyeu (60, 131, 131', 228, 560, 660, 740 ou 760) définissant au moins partiellement et entourant au moins partiellement une ouverture centrale,
caractérisé en ce que le raccord flexible de jonction en forme de disque (58, 126, 126', 226, 358, 360, 558, 658 ou 758) comprend : une pluralité de lobes (62, 63, 64, 130, 130', 140, 140', 230, 240, 250, 362, 363, 364, 462, 463, 464, 562, 563, 564, 662, 663, 664, 665, 762, 763 ou 764) espacés de la partie formant moyeu (60, 131, 131', 228, 560, 660, 740 ou 760), chaque lobe (62, 63, 64, 130, 130', 140, 140', 230, 240, 250, 362, 363, 364, 462, 463, 464, 562, 563, 564, 662, 663, 664, 665, 762, 763 ou 764) ayant des moyens de jonction de parties correspondants (65, 67, 69, 133, 133', 143 ou 143') qui relient le lobe (62, 63, 64, 130, 130', 140, 140', 230, 240, 250, 362, 363, 364, 462, 463, 464, 562, 563, 564, 662, 663, 664, 665, 762, 763 ou 764) à la partie formant moyeu (60, 131, 131', 228, 560, 660, 740 ou 760), chaque lobe (62, 63, 64, 130, 130', 140, 140', 230, 240, 250, 362, 363, 364, 462, 463, 464, 562, 563, 564, 662, 663, 664, 665, 762, 763 ou 764) consistant en une paire de bras substantiellement arqués (75 et 77, 86 et 87 ou 96 et 97) reliés l'un à l'autre contigus à son moyen de jonction de partie correspondant (65, 67 ou 69), s'éloignant l'un de l'autre dans des directions substantiellement opposées, et se terminant en extrémités libres (68 et 68'), les extrémités libres (68 et 68') des bras (75 et 77, 86 et 87 ou 96 et 97) ayant des moyens de fixation (70 et 70') pour fixer le raccord de jonction en forme de disque (58, 126, 126', 226, 358, 360, 558, 658 ou 758) à un premier (74 ou 374) et un second (76 ou 376) moyens de jonction, les moyens de fixation (70, 70', 80, 80', 90, 90', 136, 136', 138, 138', 142, 142', 144, 144', 232, 234, 242, 244, 252, 254, 370, 372, 380, 382, 390 et 392) étant configurés pour monter le raccord de jonction en forme de disque (58, 126, 126', 226, 358, 360, 558, 658 ou 758) dans une première et seconde configuration opérationnelle, la première configuration consistant à relier les extrémités des deux bras (380 et 382) d'un autre lobe (363, 562, 662 ou 762) au premier moyen de jonction (320, 374 ou 376) et relier les extrémités des deux bras (370 et 372) d'un autre lobe (362, 564, 663 ou 763) au second moyen de jonction (320, 374 ou 376), la seconde configuration consistant à relier l'extrémité (68, 136 ou 232) d'un bras (75) d'un lobe particulier (62, 130 ou 230) au premier moyen de jonction (74 ou 76) et relier l'extrémité (68', 138 ou 234) de l'autre bras (77) du lobe particulier (62, 130 ou 230) au second moyen de jonction (74 ou 76).

12. Jonction flexible selon la revendication 11 du type ayant de plus des moyens de jonction intermédiaire (320) pour fournir une jonction intermédiaire entre le premier (300) et le second (376) moyen de jonction, le moyen de jonction intermédiaire (320) comprenant un premier (326 ou 322) et un second (324 ou 328) mécanisme de montage situé de manière radiale depuis l'axe nominal de rotation, un premier raccord flexible de jonction en forme de disque (358) adapté pour être situé de manière opérationnelle entre le premier moyen (74, 374) et les moyens de jonction intermédiaire (320), et un raccord flexible de jonction en forme de disque (360) adapté pour être situé de manière opérationnelle entre les moyens de jonction intermédiaire (320) et le second moyen de jonction (76, 376),
caractérisée en ce que les moyens de fixation (70, 70', 80, 80', 90, 90', 136, 136', 138, 138', 142, 142', 144, 144', 232, 234, 242, 244, 252, 254, 370, 372, 380, 382, 390 et 392) sont configurés pour monter le raccord de jonction en forme de disque (58, 126, 126', 226, 358, 360, 558, 658 ou 758) dans une première et une seconde configurations opérationnelles, la première configuration consistant à relier les extrémités de deux bras (380 et 382) d'un lobe (363, 562, 662 ou 762) à un moyen de jonction (320, 374 ou 376) et relier les extrémités des deux bras (370 et 372) d'un autre lobe (362, 564, 663 ou 763) à un autre moyen de jonction (320, 374 ou 376), la seconde configuration consistant à relier l'extrémité (68, 136 ou 232) d'un bras (75) d'un lobe particulier (62, 130 ou 230) à un raccord de fixation (74 ou 76) et à relier l'extrémité (68', 138 ou 234) de l'autre bras (77) du lobe particulier (62, 130 ou 230) à un autre moyen de jonction (74 ou 76).

13. Jonction flexible selon les revendications 11 ou 12, dans lequel chaque raccord flexible de jonction en forme de disque (126 ou 126') comprend de plus au moins une partie formant écrou (135, 135', 137 ou 137') reliée à et s'éloignant de la partie formant moyeu (131 ou 131'), chaque partie formant écrou (135, 135', 137 ou 137') comprenant des moyens de fixation (134, 134', 139 ou 139') pour fixer le raccord de jonction en forme de disque (126 ou 126') aux autres raccords de l'appareil à engrenage menant.

14. Jonction flexible selon les revendications 11, 12 ou 13 comprenant de plus une pluralité de raccords flexibles de jonction en forme de disque (58, 126, 126', 226, 358, 360, 558, 658 ou 758) qui sont assemblés pour former une pile de disques (158, 358 ou 360) ayant une partie formant moyeu de forme fermée (60, 131, 131', 228, 560, 660, 740 ou 760) et qui sont situés entre deux moyens de jonction (74, 76, 320, 374 ou 376) recouvrant un autre raccord de jonction en forme de disque (58, 126, 126', 226, 358, 360, 558, 658 ou 758) de la pile de disque telle que les moyens de fixation (70, 70', 80, 80', 90, 90', 136, 136', 138, 138', 142, 142', 144, 144', 232, 234, 242, 244, 252, 254, 370, 372, 380, 382, 390 et 392) d'un tel raccord de jonction en forme de disque (58, 126, 126', 226, 358, 360, 558, 658 ou 758) sont substantiellement alignés avec les moyens de fixation (70, 70', 80, 80', 90, 90', 136, 136', 138, 138', 142, 142', 144, 144', 232, 234, 242, 244, 252, 254, 370, 372, 380, 382, 390 et 392) d'un autre raccord de jonction en forme de disque (58, 126, 126', 226, 358, 360, 558, 658 ou 758).

15. Jonction flexible selon les revendications 11, 12 ou 13 comprenant de plus une pluralité de raccords flexibles de jonction en forme de disque (58, 126, 126', 226, 358, 360, 558, 658 ou 758) qui sont assemblés pour former une pile de disques (158, 358 ou 360) ayant une partie formant moyeu (560) de forme ouverte (559) et qui sont situés entre deux raccords de jonction (74, 76, 320, 374 ou 376), chaque raccord de jonction en forme de disque (58, 126, 126', 226, 358, 360, 558, 658 ou 758) recouvrant un autre raccord de jonction en forme de disque (58, 126, 126', 226, 358, 360, 558, 658 ou 758) de la pile de disque telle que les moyens de fixation (70, 70', 80, 80', 90, 90', 136, 136', 138, 138', 142, 142', 144, 144', 232, 234, 242, 244, 252, 254, 370, 372, 380, 382, 390 et 392) d'un tel raccord de jonction en forme de disque (58, 126, 126', 226, 358, 360, 558, 658 ou 758) sont substantiellement alignés avec les moyens de fixation (70, 70', 80, 80', 90, 90', 136, 136', 138, 138', 142, 142', 144, 144', 232, 234, 242, 244, 252, 254, 370, 372, 380, 382, 390 et 392) d'un autre raccord de jonction en forme de disque (58, 126, 126', 226, 358, 360, 558, 658 ou 758).

16. Jonction flexible selon la revendication 11, 12 ou 13, reliée dans la première configuration dans laquelle : les deux bras (380 et 382) d'un premier lobe (363, 562, 662 ou 762) sont reliés respectivement à un premier et un second mécanismes de montage (307, 326 et 324 ou 322 et 328) d'un moyen de jonction (320, 374 ou 376) ; et les deux bras (370 et 372) d'un second lobe (362, 564, 663 ou 763) sont reliés respectivement au premier et au second mécanismes de montage (307, 326 et 324 ou 322 et 328) d'un autre moyen de jonction (320, 374 ou 376).

17. Jonction flexible selon la revendication 11, 12 ou 13, reliée dans la seconde configuration dans laquelle : un bras (75) d'un lobe particulier (62, 130 ou 230) est relié au premier mécanisme de montage (102, 104, 106, 202, 204 ou 206) d'un moyen de jonction (74 ou 76) ; et l'autre bras (77) d'un lobe particulier (62, 130 ou 230) est relié au premier mécanisme de montage (102, 104, 106, 202, 204 ou 206) d'un autre moyen de jonction (74 ou 76).

18. Jonction flexible selon la revendication 13, reliée par les moyens de fixation (136', 138', 142' et 144') dans une troisième configuration opérationnelle dans laquelle : les deux bras (136' et 138') d'un lobe (130') sont reliés respectivement au premier et au second mécanismes de montage (307) d'un premier moyen de jonction (374) ; l'écrou (137') d'au moins le premier raccord de jonction en forme de disque (126') est relié au premier mécanisme de montage (326 ou 322) des moyens de jonction intermédiaire (320) ; l'écrou d'au moins le second raccord de jonction en forme de disque est relié au second mécanisme de montage (324 ou 328) du moyen de jonction intermédiaire (320) ; et les deux bras d'un lobe du second raccord de jonction en forme de disque sont reliés respectivement au premier et au second mécanisme de montage (307) du second moyen de jonction (376).
